# EUROPEAN PATENT SPECIFICATION

(11) **EP 0 666 570 B1**
(45) Date of publication and mention of the grant of the patent: **06.12.2000**
(21) Application number: 95300623.6
(22) Date of filing: 01.02.1995
(51) Int. Cl.: G11B 33/12, G11B 33/02, G11B 17/04

(54) **Disk driver**
Plattenantriebsgerät
Lecteur de disque

(30) Priority: 08.02.1994 JP 1429494
(43) Date of publication of application: 09.08.1995
(73) Proprietor: Mitsumi Electric Company Ltd., Chofu-shi Tokyo (JP)
(72) Inventor: Konno, Makoto, c/o Newtronics Co., Ltd., Tendou-shi, Yamagata (JP); Komatsu, Hisateru, Newtronics Co., Ltd., Tendou-shi, Yamagata (JP); Watanabe, Takashi, Newtronics Co., Ltd., Tendou-shi, Yamagata (JP)
(74) Representative: Moir, Michael Christopher

(56) References cited:
- EP-A- 0 390 211

## Description

### Background of the Invention:

This invention relates to a disk driver for driving or performing write and/or read of information or data for a recording disk such as a magnetic disk or an optical disk and, in particular, to a structure in such a disk driver for guiding a disk holder for the recording disk to a position where the write and/or read is carried out for the recording disk in such a disk driver.

A known disk driver for a magnetic disk or a so-called flexible disk comprises a base having a base surface, a disk table rotatably mounted on the base through a drive shaft extending in a first direction perpendicular to the base surface and for receiving and rotating the flexible disk thereon together upon magnetic recording and/or reproducing for the flexible disk, a disk holder slidably mounted on the base in the first direction for receiving and holding the flexible disk loaded into the disk driver, a mechanism engaging with the disk holder and responsive to the loading of the flexible disk into the disk driver for moving the disk holder in the first direction to transport the flexible disk onto the disk table.

In the above-mentioned conventional disk-driver, the base is formed of a metal plate to have a pair of side plates bent at opposite sides of the metal plate. Each of the side plates of the base has a pair of protrusions formed by a lance and bend process to thereby define a groove therebetween extending in the first direction. On the other hand, the disk holder is provided with pins or bosses which are slidably inserted into the grooves. Thus, when the disk holder is moved by the disk holder moving mechanism, the disk holder is guided in the first direction.

As described above, the base of the conventional disk driver has the side plates with the protrusions for guiding the disk holder in the first direction. Because of such a structure, the conventional disk driver inevitably requires special processes to form the side plates on the base and to form the protrusions on the side plates. Thus, the conventional disk driver requires complicated processes and is therefore difficult to manufacture and high in cost.

A similar disk driver is disclosed in EP 390 211 A2. In this conventional disk driver four guide pins which uprightly project from the base plate are fitted into insertion holes provided in the disk holder.

The above prior art is reflected by the preamble of claim 1.

### Summary of the Invention

It is therefore an object of at least the preferred embodiment of this invention to provide a disk driver which is easily manufactured at low cost.

Accordingly, the present invention provides a disk driver for a recording disk comprising:
a base having a base surface and being of a generally planar shape;
a disk table rotatably mounted on said base through a drive shaft extending in a first direction perpendicular to said base surface and for receiving and rotating said recording disk thereon for recording on and/or reproducing from said recording disk;
a disk holder slidably mounted on said base in said first direction for receiving and holding said recording disk loaded into said disk driver;
a mechanism engaging with said disk holder and responsive to the loading of said recording disk into said disk driver for moving said disk holder in said first direction to transport said recording disk onto said disk table;
characterized by at least two tongues provided at or near edge portions of said base or said disk holder, said tongues extending in a second direction perpendicular to said first direction, at least two protruding portions protruding from edge portions or portions near edge portions of said base or said disk holder in the first direction, each tongue having a through hole extending in said first direction, each through hole slidably receiving a said protruding portion so that the disk holder is guided in said first direction through cooperation between said protruding portions and said through holes.

### Brief Description of the Drawing:

Fig. 1 is an exploded perspective view of a conventional disk driver;
Fig. 2 is an exploded perspective view of a disk driver according to one embodiment of this invention; and
Fig. 3 is a sectional view of the disk driver of Fig. 2 but in the assembled condition, taken along line III-III in Fig. 2.

### Description of the Preferred Embodiments:

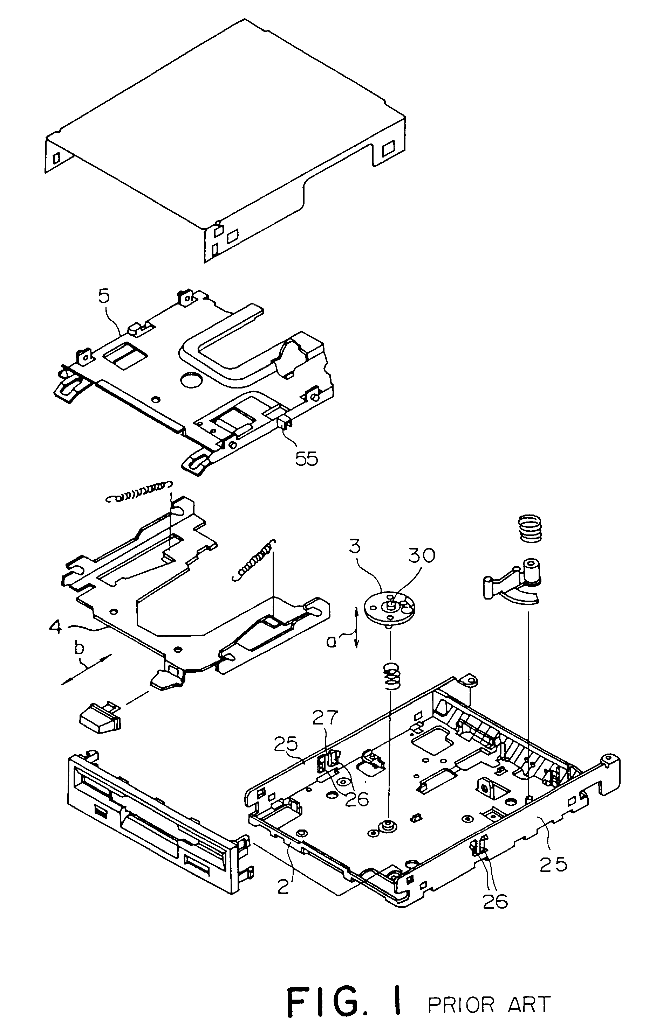

In order to facilitate an understanding of this invention, a conventional disk driver will at first be described with reference to the drawing. Referring to Fig. 1, the conventional disk driver comprises a base 2 having a base surface. The base 2 is formed of a metal plate to have a pair of side plates 25 projecting at both side edges in a first direction a perpendicular to the base surface and has, therefore, a generally U-shaped section. Each of the side plates 25 of the base 2 has a pair of protrusions 26 formed by a lance and bend process so that a groove 27 is defined between the protrusions 26 and extends in the first direction a.

On the base 2, a disk table 3 is rotatably mounted through a drive shaft 30 extending in the first direction a perpendicular to the base surface. The disk table 3 is for receiving a flexible disk (not shown) thereon and rotating it together therewith upon magnetic recording and/or reproducing for the flexible disk.

A disk holder 5 is slidably mounted on the base 2 in the first direction a and is for receiving and holding the flexible disk loaded into the disk driver. The disk holder 5 is provided with pins or bosses 55. Each of the bosses 55 of the disk holder 5 is inserted into the groove 27 of the base 2.

The disk driver is provided with a mechanism engaging with the disk holder 5. Responsive to the loading of the flexible disk into the disk driver, the mechanism moves the disk holder 5 in the first direction a to transport the flexible disk onto the disk table 2. When the disk holder 5 is moved on the base 2 in the first direction a by the mechanism, the disk holder 5 is reliably guided by engagement of the grooves and the protrusions 26 in the first direction a.

The disk holder moving mechanism comprises an eject plate 4 disposed slidable in a second direction b in relation to the base 2. The second direction b is perpendicular to the first direction and in parallel to the base surface. The eject plate 4 is engaged with the disk holder 5 by pin and cam groove connections so that the disk holder 5 is moved in the first direction a by movement of the eject plate 4. The eject plate 4 is moved in the second direction b when the flexible disk is either loaded or unloaded into disk driver.

The conventional disk driver has problems described in the preamble.

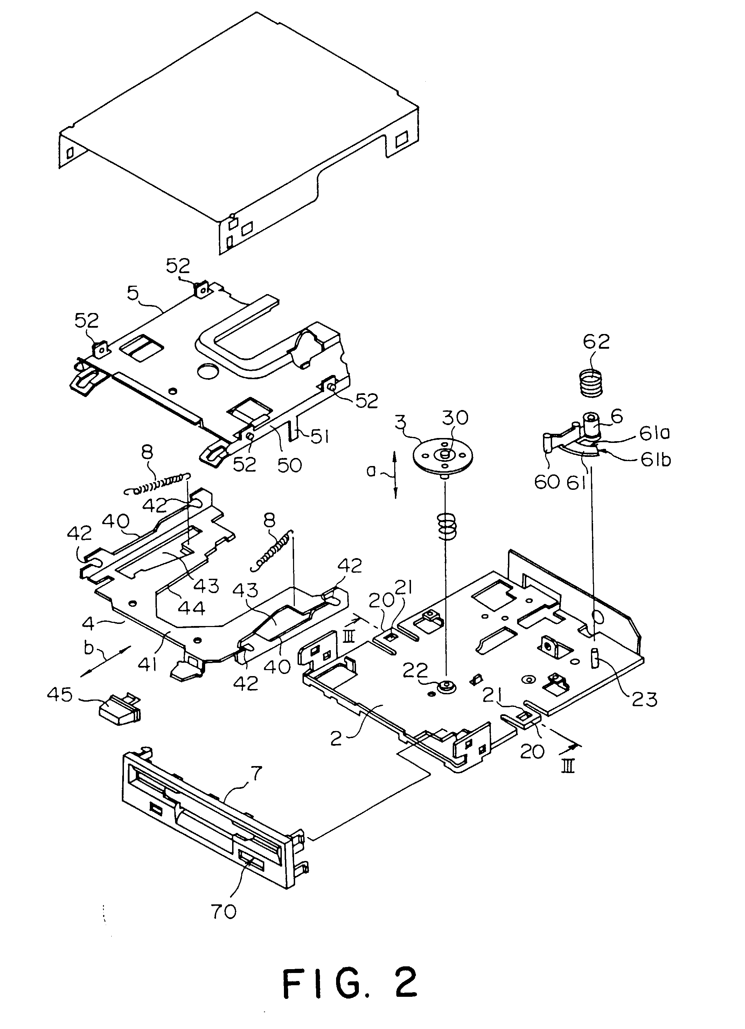

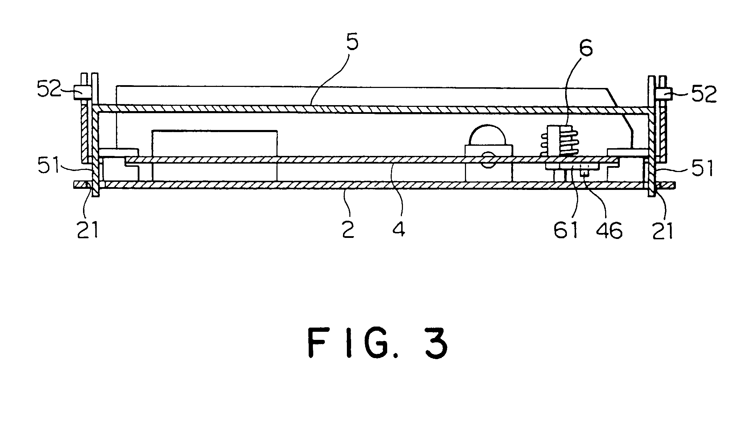

Figs. 2 and 3 show a disk driver according to one embodiment of this invention. Referring to Figs. 2 and 3, the disk driver comprises the base 2, the disk table 3, the eject plate 4, and the disk holder 5.

The base 2 has a generally planar shape. This means that the conventional side plates with protrusions for guiding the disk holder 5 are eliminated. The base 2 has opposite side edges each of which is provided with a tongue 20. A hole 21 is formed in the tongue 20. The hole 21 penetrates the tongue 20 in a first direction a perpendicular to the base 2. The base 2 has a bearing 22 with an axis extending in the first direction a.

The base 2 is provided with an eject lever 6 pivotally supported on a pin 23 on the base 2. The eject lever 6 has a lever portion 60 and an arcuate engaging portion 61. A coil spring 62 is fitted to the eject lever 6 to urge the eject lever 6 to turn in a counterclockwise direction in the figure. A front bezel 7 is attached to a front end of the base 2.

The disk table 3 has a rotation shaft 30. By inserting the rotation shaft 30 into the bearing 22 formed on the base 2, the disk table 3 is rotatably supported on the base 2. Thus, the rotation shaft 30 of the disk table 3 extends in the first direction a.

The eject plate 4 is disposed on the base 2 and is reciprocally slidable in a second direction b perpendicular to the first direction a. The eject plate 4 has a pair of side plates 40 and a bottom plate 41. Each of the side plates 40 is formed with a cam portion 42. The bottom plate 41 of the eject plate 4 is provided with apertures 43 formed along the side plates 40 and a cut-away portion or opening 44 for avoiding contact with the disk table 3 and accommodating it therein. The bottom plate 41 has a lower surface provided with a pin 46. The pin 46 is engaged with the engaging portion 61 of the eject lever 6. The bottom plate 41 has a front end to which a button 45 is attached. The button 45 outwardly projects from the front bezel 7 through a hole 70 formed on the front bezel 7. The eject plate 4 is urged towards the front bezel 7 in the second direction b by a pair of coil springs 8, which are tensioned between the eject plate 4 and the disk holder 5.

The disk holder 5 is mounted on the base 2 and is reciprocally slidable in the first direction a. The disk holder 5 receives and holds a flexible disk (not shown) loaded into the disk driver through the bezel 7. The disk holder 5 engages with the eject plate 4 so that the disk holder 5 is moved in the first direction a by motion of the eject plate 4 in the second direction b, to thereby bring the flexible disk into contact with, or out of contact with, the disk table 3.

That is, the disk holder 5 is provided with a pair of side plates 50. Each of the side plates 50 has a pair of pins 52. The pins 52 are inserted in the cam portions 42 formed on the side plates 40 of the eject plate 4. Thus, the disk holder 5 is reciprocally moved along the first direction a in response to the reciprocal movement of the eject plate 4 in the second direction b.

Each of the side plates 50 has also a protruding piece 51 extending in the first direction a towards the base 2. Each protruding piece 51 is inserted into the corresponding one of the holes 21 of the base 2 through the apertures 43 of the eject plate 4. By insertion of the protruding pieces 51 into the holes 21 of the base 2 as described above, the disk holder 5 is positioned with respect to the base 2 in the second direction b. Simultaneously, the disk holder 5 is rendered slidable reciprocally in the first direction a. In other words, the protruding piece 51 is one example of a guide member extending in the first direction a.

In this embodiment, the disk holder 5 has the protruding pieces 51 while the base 2 is provided with the holes 21. On the contrary, the protruding pieces and the holes may be formed on the base and on the disk holder, respectively.

Description will now proceed to the operation of the disk driver according to this embodiment.

At first, the flexible disk is inserted into the disk driver through the front bezel 7. The flexible disk slides in the disk holder 5 until its top end is brought into contact with the lever portion 60 of the eject lever 6. When the flexible disk is further pushed inward, the eject lever 6 is pressed by the flexible disk to be rotated in a clockwise direction in the figure. Then, the lever portion 60 of the eject lever 6 opens a shutter of the flexible disk. When the flexible disk is still further pushed inward, it releases an inner peripheral surface 61a of the engaging portion 61 of the eject lever 6 from engagement with the pin 46 formed on the lower surface of the eject plate 4. As a consequence, the eject plate 4 is forced by an urging force of the coil springs 8 to slide towards the front bezel 7 in the second direction b. In this event, the cam portions 42 of the eject plate 4 press the pins 52 of the disk holder 5 downward or towards the base 2. As a result, the disk holder 5 is downwardly moved along the first direction a. At this time, the disk holder 5 is reliably guided downwardly in the first direction a by the holes 21 of the base 2 and the protruding pieces 51 of the disk holder 5 inserted therethrough. When the eject plate 4 moves to a stop position adjacent the front bezel 7 so that the disk holder 5 reaches the lowermost position, the lower pin 46 of the eject plate 4 is engaged with a radial surface 61b of the engaging portion 61 of the eject lever 6.

When the disk holder 5 is moved downward, a hub of the flexible disk is pressed onto the disk table 3. In the condition, the flexible disk can be driven by a motor (not shown) through the disk table 3.

On the other hand, when the flexible disk is removed from the disk driver, the button 45 is pushed inwardly in the second direction b, so that the eject plate 4 slides towards the eject lever 6. Therefore, the cam portions 42 of the eject plate 4 presses the pins 52 of the disk holder 5 upward. As a consequence, the disk holder 5 is moved upward to be apart from the disk table 3. At this time, the disk holder 5 is reliably guided in the first direction a by cooperation of the holes 21 of the base 2 and the protruding pieces 51 of the disk holder 5. When the eject plate 4 is further pressed towards the eject lever 6, it releases the pin 46 formed on the lower surface of the eject plate 4 from the engagement with the radial surface 61b of the engaging portion 61 of the eject lever 6. The eject lever 6 is rotated in a counterclockwise direction by the urging force of the coil spring 62. At this time, the lever portion 60 of the eject lever 6 presses the flexible disk. As a result, the flexible disk slides in the disk holder 5 so that a part of the flexible disk is outwardly ejected from the front bezel 7. Then, the inner peripheral surface 61a of the engaging portion 61 of the eject lever 4 and the pin 46 formed on the lower surface of the eject plate 4 are engaged with each other. As a consequence, the eject plate 4 is maintained at the wait condition and the disk holder 5 is also maintained at the upper position by the eject plate 4.

## Claims

1. A disk driver for a recording disk comprising:
a base (2) having a base surface and being of a generally planar shape;
a disk table (3) rotatably mounted on said base (2) through a drive shaft (30) extending in a first direction perpendicular to said base surface and for receiving and rotating said recording disk thereon for recording on and/or reproducing from said recording disk;
a disk holder (5) slidably mounted on said base (2) in said first direction for receiving and holding said recording disk loaded into said disk driver;
a mechanism (4, 6, 8) engaging with said disk holder and responsive to the loading of said recording disk into said disk driver for moving said disk holder (5) in said first direction to transport said recording disk onto said disk table (3);
characterized by at least two tongues (20) provided at or near edge portions of said base (2) or said disk holder (5), said tongues (20) extending in a second direction perpendicular to said first direction, at least two protruding portions (51) protruding from edge portions or portions near edge portions of said base (2) or said disk holder (5) in the first direction, each tongue (20) having a through hole (21) extending in said first direction, each through hole (21) slidably receiving a said protruding portion (51) so that the disk holder (5) is guided in said first direction through cooperation between said protruding portions (51) and said through holes (21).

2. A disk driver as claimed in Claim 1, wherein said disk holder (5) or said base (2) includes a pair of side plates (50) opposite each other in said second direction, said protruding portions (51) protruding from said side plates (50) in said first direction.

3. A disk driver as claimed in Claim 2, wherein said pair of side plates (50) is provided in said disk holder (5), said tongues (20) being provided in said base (2).

4. A disk driver as claimed in Claim 3, wherein each tongue (20) is of a planar shape and is formed integral and flush with said base (2), each of said protruding portion (51) being formed integral with respective ones of said side plates (50).

## Patentansprüche

1. Plattenantriebsgerät für eine Aufzeichnungsplatte mit:
einer Basis (2) mit einer Basisoberfläche, und die aus einer allgemein ebenen Form gebildet ist;
einem Plattentisch (3), der drehbar auf der Basis (2) durch eine Antriebswelle (30) angebracht ist, die sich in einer ersten Richtung senkrecht zu der Basisoberfläche erstreckt, und der zum Aufnehmen und Drehen der Aufzeichnungsplatte darauf zum Aufzeichnen auf und/oder Wiedergeben von der Aufzeichnungsplatte dient;
einem Plattenhalter (5), der gleitfähig in der ersten Richtung auf der Basis (2) angebracht ist, zum Aufnehmen und Halten der in das Plattenantriebsgerät geladenen Aufzeichnungsplatte;
einem Mechanismus (4, 6, 8), der in Eingriff mit dem Plattenhalter steht und auf das Laden der Aufzeichnunqsplatte in das Plattenantriebsgerät reagiert, zum Bewegen des Plattenhalters (5) in die erste Richtung zum Transportieren der Aufzeichnungsplatte auf dem Plattentisch (3);
gekennzeichnet durch mindestens zwei Zungen (20), die an oder nahe zu Kantenabschnitten der Basis (2) oder des Plattenhalters (5) vorgesehen sind, wobei sich die Zungen (20) in einer zweiten Richtung senkrecht zu der ersten Richtung erstrecken, mindestens zwei vorstehende Abschnitte (51) von Kantenabschnitten oder Abschnitten nahe zu Kantenabschnitten der Basis (2) oder des Plattenhalters (5) in der ersten Richtung vorstehen, jede Zunge (20) ein Durchgangsloch (21) aufweist, das sich in der ersten Richtung erstreckt, jedes Durchgangsloch (21) gleitfähig einen vorstehenden Abschnitt (51) so aufnimmt, daß der Plattenhalter (5) in der ersten Richtung durch die Zusammenwirkung zwischen den vorstehenden Abschnitten (51) und den Durchgangslöchern (21) geführt wird.

2. Plattenantriebsgerät nach Anspruch 1, bei dem der Plattenhalter (5) oder die Basis (2) ein Paar von Seitenplatten (50) einander in der zweiten Richtung gegenüberstehend, aufweist, wobei die vorstehenden Abschnitte (51) von den Seitenplatten (50) in der ersten Richtung vorstehen.

3. Plattenantriebsgerät nach Anspruch 2, bei dem das Paar von Seitenplatten (50) in dem Plattenhalter (5) vorgesehen ist, wobei die Zungen (20) in der Basis (2) vorgesehen sind.

4. Plattenantriebsgerät nach Anspruch 3, bei dem jede Zunge (20) von einer ebenen Form ist und einstückig und fluchtend mit der Basis (2) gebildet ist, wobei jeder der vorstehenden Abschnitte (51) einstückig in bezug auf die Seitenplatten (50) gebildet ist.

## Revendications

1. Lecteur de disque pour disque d'enregistrement, comprenant :
• une base (2) munie d'une surface de base et présentant une forme généralement plane ;
• une platine de disque (3) montée en rotation sur la base (2) par l'intermédiaire d'un arbre d'entraînement (30) s'étendant dans une première direction perpendiculaire à la surface de base, et destinée à recevoir et à faire tourner le disque d'enregistrement sur celle-ci pour effectuer un enregistrement et/ou une lecture sur ce disque d'enregistrement
• un porte-disque (5) monté en glissement sur la base (2) dans la première direction, pour recevoir et maintenir le disque d'enregistrement chargé dans le lecteur de disque ;
• un mécanisme (4, 6, 8) venant en prise avec le porte-disque et répondant au chargement du disque d'enregistrement dans le lecteur de disque pour déplacer le porte-disque (5) dans la première direction, de manière à amener le disque d'enregistrement sur la platine ce disque (3) :
caractérisé par
au moins deux languettes (20) prévues à l'endroit ou au voisinage des parties de bord de la base (2) ou du porte-disque (5), ces languettes (20) s'étendant dans une seconde direction perpendiculaire à la première direction, au moins deux pattes en saillie (51) dépassant de la partie de bord ou des parties de bord au voisinage des parties de bord de la base (2) ou du porte-disque (5) dans la première direction, chaque languette (20) étant percée d'un trou traversant (21) s'étendant dans la première direction, chaque trou traversant (21) recevant en glissement une patte en saillie (51) de façon que le porte-disque (5) soit guidé dans la première direction par la coopération des pattes en saillie (51) avec les trous traversants (21).

2. Lecteur de disque selon la revendication 1,
dans lequel
le porte-disque (5) ou la base (2) comprend une paire de plaques latérales (50) opposées l'une à l'autre dans la seconde direction, les pattes en saillie (51) dépassant des plaques latérales (50) dans la première direction.

3. Lecteur de disque selon la revendication 2,
dans lequel
la paire de plaques latérales (50) est prévue dans le porte-disque (5) tandis que les languettes (20) sont prévues dans la base (2).

4. Lecteur de disque selon la revendication 3,
dans lequel
chaque languette (20) est de forme plane et fait partie intégrante de la base (2) en étant à ras de celle-ci, tandis que chacune des pattes en saillie (51) fait partie intégrante de l'une respective des plaques latérales (50).
